# EUROPEAN PATENT SPECIFICATION

(11) **EP 2 962 477 B1**
(45) Date of publication and mention of the grant of the patent: **10.07.2019**
(21) Application number: 13708720.1
(22) Date of filing: 27.02.2013
(51) Int. Cl.: H04W 4/00, H04W 48/06, H04W 4/021, H04W 24/02, H04W 4/90

(54) **METHOD, APPARATUS AND SYSTEM FOR PERFORMING PRIORITIZED BARRING OF SERVICE ACCESS**
VERFAHREN, VORRICHTUNG UND SYSTEM ZUR DURCHFÜHRUNG PRIORISIERTER SPERRUNGEN DES ZUGRIFFS AUF EINEN DIENST
PROCÉDÉ, APPAREIL ET SYSTÈME POUR EFFECTUER UNE INTERDICTION PRIORISÉE DE L'ACCÈS À UN SERVICE

(43) Date of publication of application: 06.01.2016
(73) Proprietor: Unified Messaging Systems AS, 0604 Oslo (NO)
(72) Inventor: HEEN, Kjell-Harald, N-1087 Oslo (NO)
(74) Representative: Onsagers AS
(86) International application number: PCT/EP2013/053905
(87) International publication number: WO 2014/131439

(56) References cited:
- WO-A1-2009/104970
- WO-A1-2010/137993
- WO-A1-2014/009212
- US-A1- 2012 003 959
- "3rd Generation Partnership Project; Technical Specification Group Services and System Aspects; System Improvements for Machine-Type Communications (Release 11)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V2.0.0, 12 September 2012 (2012-09-12), pages 1-166, XP050649065, [retrieved on 2012-09-12]

## Description

### Introduction

The present invention relates to alerting people staying at a specific geographical location. More specifically the invention is described by a method, device and system for optimal utilization of the capacity of a mobile network that is serving mobile phones covering a specific selected geographical area.

### Background

Today people are exposed to more threats than for just a few decades ago, and at the same time efficient existing methods for alerting people are mostly based on old technology using sirens or bells for alerting of war related scenarios like bomb and missile attack. This is not considered to be usable for methodical alert for emergency situations related to unpredictable weather conditions due to climatic changes, increased transportation through dense populated areas, industry located close to populated areas, infrastructure breakdown, and increased risk for terrorism. There is however growing awareness of using new technology and implementing better methods for alerting people.

New and efficient methods for alerting and protecting people is now a highly focused area within the EU and US, but also in Asian countries which are often exposed to natural disasters such as tsunamis and earthquakes. Billions of Euros have been spent in developing systems and methods for detecting and predicting in advance different kinds of natural or man made hazards (e.g. Global Monitoring Environmental Security (GMES) program). A predictive monitoring system has less or no value if it is not capable of alerting people exposed to the danger. Finding new and more efficient methods for alerting people is therefore a highly focused topic.

A complete population alerting system must utilize multiple systems and channels for transmission and distribution of alert messages. The possibility of alerting persons directly via mobile phones is now preferred as it is regarded to be very efficient. This alerting method is however critical due to possible heavy traffic load on the network infrastructure in a specific area serving the mobile phones.

Mobile telephony has now become a service covering critical tasks for the society. This includes alerting of a population in case of a critical incident. In such cases a typical result is that network traffic increase dramatically depending on type of incident and scope. The reason for this is concerned affected people in need of information.

Measurements have shown that initiated phone calls are doubled multiple times compared to a normal situation. Such increase in network traffic may cause severe consequences for the infrastructure of a mobile network serving an area with the highly increased network traffic. It is not unusual that over 90% of all initiated calls are rejected. In extreme cases central parts of the core system of the infrastructure serving the network is hit, e.g. Home Location Register (HLR). This may result in that the geographical area affected stretches far beyond the area with the increased network traffic, resulting in reduced quality of service or total lack of service.

The cause for overloading is that mobile networks are dimensioned according to economical principles based on maximum use under normal circumstances. When the use of the network goes beyond this capacity with several hundred percent problems will obviously arise, resulting in an unstable network that is not useful for critical communication if none measures are made in order to restrict public communication.

Different countries have different population sizes and thus require differentiated set-up of LBAS (Location Based Alert Services). As an example, a small country can be drifted without an optimizing message distribution component (A-SMSC), while a medium sized country will have an intermediate solution where existing A-SMSCs are used with throttle control. A country with a large population will require high capacity A-SMSCs.

It will not be accepted that a critical service like population alerting is vulnerable and may break down during severe incidents since effective alerting may save lives. Secure and efficient alert of mobile phone users has been a problem that has not been sufficiently solved with regard to overload and efficiency aspects. Systems as described in prior art having some similarity to the present invention suffer from being ineffective and vulnerable due to the fact that alert messages have to go through the existing structure and devices in the mobile network in the same way as other calls and network traffic, thereby exposing the system for overload when sending a lot of alert messages at the same time.

Experience shows that a mobile network experiences heavy load in areas where an emergency situation occurs. When sending large amounts of alert messages at the same time, the network will become unstable, and the probability for slowing down the network increases. A total breakdown of the network may further occur.

This is very disadvantageous since the purpose of efficient alerting is to send as many alert messages as fast and efficient as possible to mobile phone users staying at a specific geographic area.

Document WO 2010/137993 A1 discloses sending alert messages to users of mobile phones staying at a specific geographical location without overloading the network and independently of user preferences. WO 2014/009212 A1 relates to managing traffic in a communication network during an emergency situation. Barring of non-prioritized network communication traffic during alert messaging of a plurality of User Equipments located within a specific geographical area is provided.

The present invention presents an improved solution in view of prior art and contributes to a fast and efficient alerting without letting the network break down due to overload.

### Short description of the invention

The invention is defined by independent claims 1, 11 and 13. In the following, parts of the description and drawings referring to embodiments which are not covered by the claims are not presented as embodiments of the invention, but as examples useful for understanding the invention.

The present invention is defined by a method for optimal utilization of the capacity of a mobile network serving mobile phones located in a selected geographical area as according to claim 1. The purpose is optimal handling of network traffic in a period with heavy network traffic to and/or from said area without overloading said mobile network. The method comprises the steps specified in claim 1.

Further features of the method are described in the dependent claims.

The invention is also defined by a device and system for performing the method described above with features as defined in the claims.

### Detailed description of the invention

The invention will now be described in details with reference to the drawings where:
Figure 1 shows an overview of the method steps;
Figure 2 shows details of the barring process for selecting type of barring, and
Figure 3 illustrates how the inventive method will work when implemented in a 2G/3G network.

Optimal utilization of the capacity of a mobile network is of specific importance for handling network traffic in a period with heavy traffic to and/or from said area for avoiding overloading of the mobile network.

A typical situation when overloading may occur is when an incident within an area affecting a lot of people happens. This may for instance be a natural disaster like earthquake, tsunami or flooding. It may also be man made disasters like for instance gas leaks and explosions.

In such cases it may be of vital importance to inform and alert affected persons. For performing an efficient alerting, simultaneously sending of information to a plurality of phone users located in a specific geographical area should be performed.

Prior to sending such alert messages it can however be expected that the network traffic from the area has increased due to worried persons, calling from or sending messages from an affected area in need of information.

In order to handle this situation in an optimal way and without overloading the network in said specific area, the present invention comprises a system performing a method with several steps.

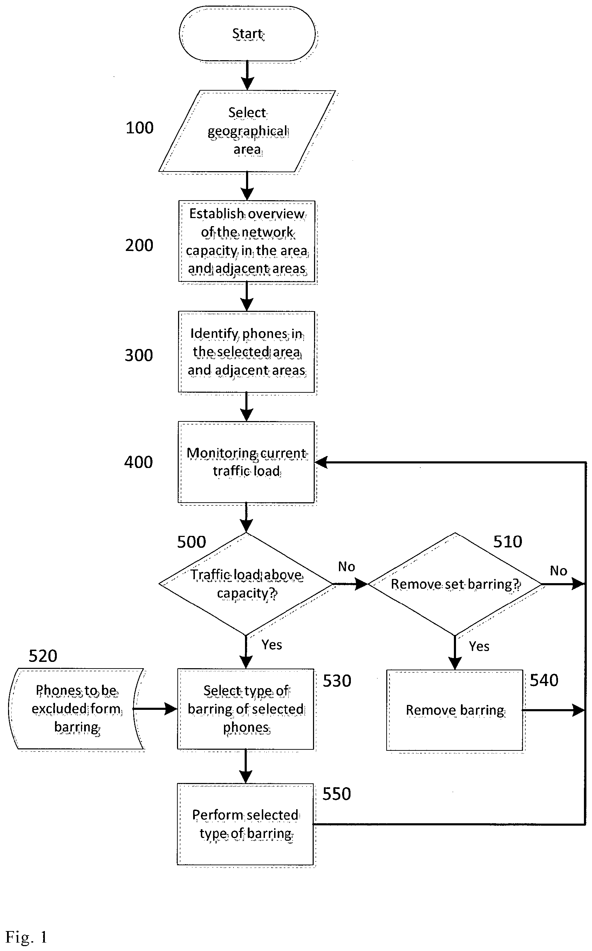

Figure 1 shows an overview of the steps comprised in the inventive method for continuous and optimal utilization of the capacity of a mobile network that is serving mobile phones covering a specific selected geographical area.

First one or more specific areas 100 have to be selected, hereafter called an area or a specific area, where optimal utilization of the capacity of a mobile network serving the area is to be performed.

In one embodiment for performing, an operator of the system will be presented with information comprising maps from which the area concerned can be selected. The specific area is typically selected from map presented on a screen, e.g. by marking an area with a polygon or circle.

A computer presenting the map is connected to a Location Based Barring Component (LBBC) that will identify the cells of a mobile network covering the selected area. The number of persons in the area, based on connected phones to identified cells, will be presented and an operator can send desired information to the persons. Such a system is also capable of receiving information and requests from persons responding to a transmitted alert message. In this way, the system will also present the status of different persons residing in the area concerned and to which an alert has been sent. These features are however not within the scope of the present invention.

Step a) of the invention, which is after selecting a specific area, is establishing an overview of maximum network capacity 200 of the mobile network serving the selected geographical area as well as adjacent areas. Based on the area selected the infrastructure of the mobile network serving the area can be identified. Different network components serving the selected area can be located on the inside or the outside of the area or more likely both on the inside and on the outside of a selected area.

Determining maximum network capacity is vital for continuous optimal utilization of the capacity of a mobile network serving a selected area without overloading the network.

Step b) is establishing an overview of the identity of relevant mobile phones connected to the network serving said selected area 300 as well as mobile phones in adjacent areas that are also served by said mobile network. This will establish an overview for determining possible maximum traffic load on the mobile network serving the selected area.

Determining possible traffic load is based on a worst case scenario where each connected phone exerts maximum load on the network. The identity of persons linked to the phones is associated with MSISDN numbers on their SIM cards in their mobile phones.

The total traffic load on a network depends on different types of services, delivered via the network, influencing the network load differently. One aspect of the present invention is therefore to differentiate between different types of network traffic for optimal utilization of the network capacity serving the selected area, and without possibly shutting down all network services for a particular mobile phone.

The next step c) of the method is performing continuous monitoring of current traffic load 400 of mobile services on said mobile network. Different types of services delivered via the network are monitored. These services comprise voice, SMS messaging, and data activity loading the network differently. Data activity is the type of network service generating the highest traffic load on the network. This especially applies to streaming of data requiring a constant high bandwidth, e.g. streaming of video.

When performing continuous and optimal utilization of the capacity of a mobile network that is serving mobile phones in a specific selected geographical area, step c) is the starting and returning step for the following barring steps for performing continuous adjusted optimization.

It is first decided if the traffic load is above the capacity of the network 500.

If it is found that the total traffic load is below the maximum capacity of the network it is checked if possible set barring may be removed 510. This decision is based on how close the current traffic load is to the maximum capacity of the network. If the traffic load is well below the maximum capacity, e.g. 10% below, a set barring is removed 540. If not, the step c) is entered again for continuous monitoring of current traffic load 400.

If it is found that the total traffic load is above the maximum capacity of the network then step d) of the method is entered.

Step d) is determining which type of barring to perform 530, i.e. selective barring of one or more mobile services to and/or from selected relevant mobile phones based on the established maximum network capacity, the established possible maximum traffic load, and the current monitored traffic load.

Ideally it is not desirable to bar any mobile services, but due to restricted network capacity in a period of time it may be required. This may for instance be under special circumstances such as a sudden emergency incident within an area as discussed above.

Barring may be initiated based on expected increase in traffic load and prior to reaching a traffic load on a network that is close to the maximum network capacity. It may for instance be desirable to initiate barring as soon as an emergency situation in an area has occurred, and prior to sending of alert messages to persons residing in said area. Type of barring to select, if any, will then be continuously assessed and implemented according to current load status during alerting.

Some phones may be excluded from being barred. Such phones are typically linked to personnel dedicated to assist during an emergency situation. The identities of these phones are kept in a list 520. When a specific type of barring of selected phones 530 is performed for identified mobile phones, the list is checked and phones in the list is excluded from being barred.

Total network load is the sum of different network services such as voice, data and SMS. Based on monitoring of these the service or services loading the network the most is selected to be barred.

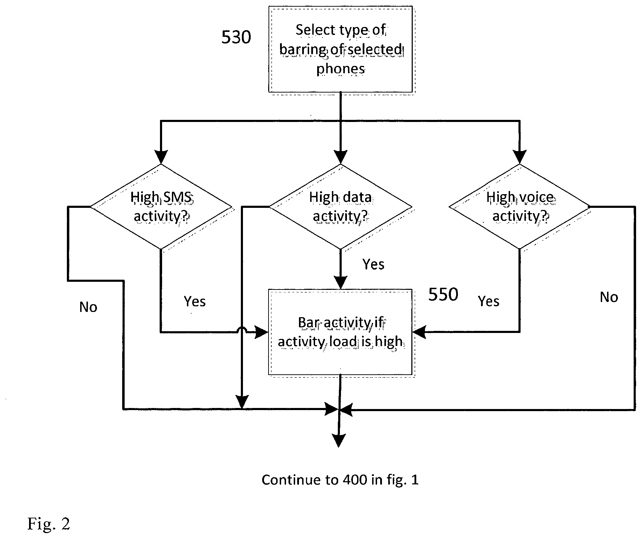

Figure 2 illustrate the selection method of which service to bar, i.e. the decision steps between steps 530 and 550.

Maximum network capacity will be the primary parameter controlling type and degree of barring. Barring of one or more of a selected type of service can be performed for relevant mobile phones located inside said selected area.

In one embodiment of the invention, a service generating network traffic to mobile phones in the area may be barred. In another embodiment a service generating network traffic from mobile phones in the area may barred. In yet another embodiment a service generating traffic to and from the area may be barred.

The same applies to services to phones in adjacent areas that are generating network traffic on the same network as the one serving said selected area, i.e. barring of a selected type to and/or from relevant mobile phones in areas adjacent to said selected area is performed.

In one embodiment of the method the load of the network serving an area is controlled by barring services to and/or from relevant mobile phones located both inside said selected area as well as areas adjacent to said selected area is performed.

As mentions LBBC has access to a tool, e.g. Location Based Alert Service (LBAS), identifying which cells that are covering the selected area, as well as subscribers connected to the cells. At a minimum this database comprises MSISDN and corresponding Cell Id. Qualification of subscribers for whom barring is to be performed is executed by verifying that Cell_Id for a subscriber correspond with Cell_Id retrieved from a list covering the selected area.

In order to avoid barring of services for phones for a longer period, relevant identified phones may in one embodiment of the invention be grouped in at least two groups, and where selected network services is barred for one group at a time set by time intervals.

Gradual barring of network services can be performed when it is desirable to restrict outgoing and/or ingoing traffic to or from an area. Barring of network services may then rotate between the groups set by the time intervals, such that each group will have accesses to some or all network services for a limited time in a period with heavy network traffic.

As mentioned data activity on a mobile network is more demanding with regards to heavy network load and bandwidth compared to voice and SMS. Therefore in one preferred embodiment of the invention only data traffic with high bandwidth demanding services such as streaming is barred. In another embodiment all streaming services is barred.

The last step e) of the inventive method is executing barring, i.e. performing continuous selected type of barring 550 of said selected mobile phones served by said mobile network for utilizing maximum capacity of the network without overloading the network during heavy network traffic.

Type of barring selected to be performed or executed is based on said previous steps resulting in an overview of total traffic load on the network as well as the traffic load of each of the different network services. Based on this result, the network service contributing the most to the traffic load will be barred for all or selected mobile phones when performing prioritized barring.

Prioritized barring is when prioritized mobile phones is excluded from being barred. This can be performed by placing a priority tag for specific relevant mobile phones, where the tag indicates that the prioritized mobile phones with corresponding MSISDN numbers shall not be barred.

Barring is preferably performed continuously during periods with heavy or extreme load, e.g. when an incident within an area affecting a lot of people happens. When barring is to be implemented it is ideally performed gradually based on current traffic load and total network capacity. The amount of barring will increase if the traffic load on the network is close to maximum capacity. Likewise the amount of barring will decrease if the traffic load is below the maximum capacity.

The values defining these limits can be set prior to implementation of the method. In one embodiment these values are set by an operator in the LBBC.

Ideally the method is implemented such that optimal network capacity is continuously utilized during a period with heavy network traffic.

The present invention is also defined by a location based barring component (LBBC), i.e. a device for performing continuous and optimal utilization of the capacity of a mobile network that is serving mobile phones covering a specific selected geographical area, for the purpose of optimal handling of a period with heavy network traffic to and/or from said area without overloading said mobile network.

In one embodiment, the device is connected to means for selecting said geographic area, e.g. touch screen.

In another embodiment, the device itself comprises means for selecting said geographic area.

In both of these embodiments an operator will be presented with information comprising maps from which a specific area can be selected.

A zooming and panning functionality on a graphical user interface will make it easy to find a specific area. When the user clicks on a area that is to be subjected to network control according to the invention, the user can be presented with a number of persons linked to mobile phones who are staying in the country/area.

The device comprises input means for receiving a selected geographic area.

The device further comprises input means for establishing an overview of the identity of relevant mobile phones located within said selected geographic area as well as in adjacent areas served by said mobile network for determining possible maximum traffic load on the mobile network.

The identity of relevant mobile phones located within said selected geographical area as well as in adjacent areas can be found by using a probe, for instance on the A-interface between the BSC and MSC in a GSM Network. This identifies queries, which contain location information. This information is used for updating a database that is either comprised in or accessible for the inventive device. The database comprising data about the visited country, region, MSISDN, date and time for last update for each person associated with the MSISDN number. Through use of said probe, the database will at all times contain updated information about persons staying abroad, in that a new registration comprising updated location information and MSISDN numbers is added to the database when the probe detects a query about a relevant MSISDN number from a foreign operator, and where the record is updated continuously as new queries from new areas or countries are detected. Existing registrations is deleted from the database when the probe detects that a person associated with the MSISDN number in question leaves the selected area.

The technology used for establishing an overview of the identity of relevant mobile phones located within a selected area as well as in adjacent areas served by said mobile network, for determining possible maximum traffic load on the mobile network, is regarded as prior art and is thus not described further here.

The number of persons in the selected area may be presented on the graphical user interface. Based on this the operator can make appropriate actions, e.g. type of barring to be used etc.

The device further comprises means for establishing an overview of maximum network capacity of said mobile network serving the selected area. The device thus comprises input means for receiving data regarding the network capacity.

The device further comprises means for establishing an overview of the current traffic load of mobile services on said mobile network serving the selected area. The device thus comprises input means for receiving data regarding current traffic load.

If requests on HLR rise above a set level, it is considered that the current traffic load is above the network capacity.

The device further comprises location based barring means for determining type of barring of one or more mobile services to and/or from said relevant mobile phones based on said possible maximum traffic load, said maximum network capacity and said current traffic load. The device further comprises input means for receiving data regarding prioritised mobile phones that are not to be barred. The location based barring means implements the inventive method described above.

The device further comprises output means for outputting barring controlling signals to a mobile switching centre. Said signals controlling enabling and disabling of barring of selected mobile services to and/or from identified mobile phones, as well as type of barring determined by the device (LBBC).

The inventive device (LBBC) is the key component for controlling and utilizing maximum capacity of the network without overloading the network during heavy network traffic.

The present invention is further described by a system for performing continuous and optimal utilization of the capacity of a mobile network that is serving mobile phones covering a specific selected geographical area, for the purpose of optimal handling of a period with heavy network traffic to and/or from said area without overloading said mobile network.

As said the LBBC is the key component comprised in the system.

The system comprises means for selecting said geographic area, and means for establishing an overview of the identity of relevant mobile phones located within said selected geographic area as well as in adjacent areas served by said mobile network for determining possible maximum traffic load on the mobile network.

It further comprises means for establishing an overview of maximum network capacity of said mobile network serving said areas, and means for establishing an overview of the current traffic load of mobile services on said mobile network.

Some of these means may be comprised in said LBBC device that is the device in the system determining type of barring of one or more mobile services to and/or from said relevant mobile phones based on said possible maximum traffic load, said maximum network capacity and said current traffic load.

In one embodiment, the system further comprises a priority database with the identity of prioritised mobile phones that are not to be barred.

The system further comprises a mobile switching centre enabling and disabling selected mobile services to and/or from identified mobile phones, said switching centre having input means for receiving the identity of mobile phones to be barred, and type of barring determined by said location based barring device.

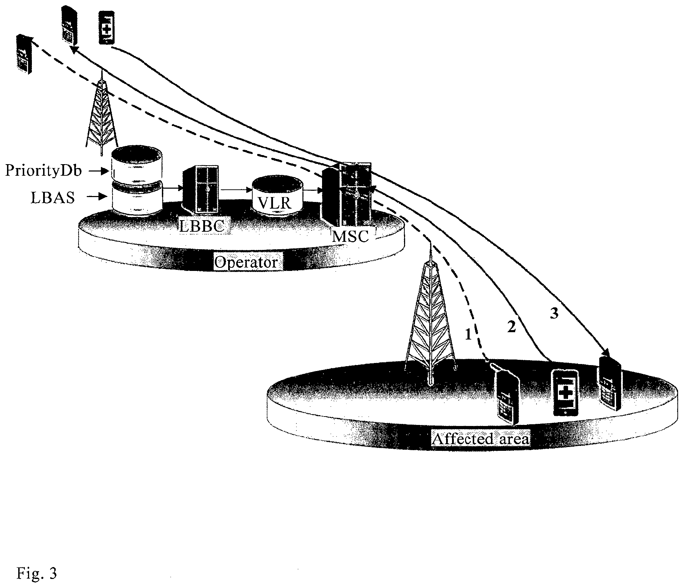

Figure 3 illustrate an example for how the inventive method will work when implemented in a 2G/3G network. The key device in the configuration of the network is the Location Based Barring Component (LBBC) controlling setting and removing of barring for services of phones in a selected area which is noted as affected area in the figure.

LBBC is located at the site of the operator executing the barring method. In this example, the LBBC is connected to a priority database (PriorityDb) comprising IDs of MSISDN that are not to be barred. LBBC is further connected to a Location Based Alert Service (LBAS) with a database comprising updated information on all subscribers located in a selected area.

LBBC is further connected to a Visitor Location Register (VLR). VLR is a database storing national location data. Data form VLR is input to a Mobile Switching Centre (MSC) implementing the barring that is controlled by the LBBC.

Prior to implementing barring, the following information must be known and the following actions must be performed:
- Establishing an overview of the area or areas where barring is to be implemented. An operator will select this, typically by marking an area on a screen.
- Establishing an overview of persons in the selected area. This is retrieved from the LBAS database.
- Establishing an overview of persons that are to be excluded from barring. This is retrieved from the Priority Db database.

Based on this the LBBC will output barring data to the service device, in this case the VLR, that provides the input data to the MSC controlling that mobile traffic to and from the mobile phones.

The following is a simplified example scenario where continuous optimal handling of network traffic in a period with heavy network traffic to and/or from an affected area is to be performed.

Call 1 (dotted line) indicates a call initiated from an ordinary user in an affected area to an ordinary. Since both parties are ordinary users, the call is rejected, i.e. barred.

Call 2 indicates a call initiated from a prioritised user in an affected area to an ordinary user. The call is accepted, i.e. no barring.

Call 3 indicates a call initiated from a prioritised user outside an affected area to an ordinary user in an affected area. The call is accepted, i.e. no barring.

This example illustrate the barring mechanism. In a real case scenario, the invention will ensure automatic and continuous setting and removing of different types of barring, e.g. data, voice, SMS, according to current load of the network components serving a specific affected area.

Operators implementing the described inventive barring will in most cases have access to historical data giving an overview of expected number of people within an area. Based on this, a set of barring rules can be implemented in the LBBC as default data when barring is initiated. The default barring rules may of course be changed by an operator of the LBBC system. This may be the case if it is detected that the number of mobile phones within an area is higher that expected, i.e. higher that found from the historical data. Barring rules may comprise type of service to bar, barring incoming and/or outgoing calls, and phones to be excluded from barring etc.

As described in the introduction of this disclosure, different areas will require differentiated set-up Location Based Alert Services. For areas or countries with large population it is vital to provide an alerting service with throttle control.

The LBBC and the method for implementing barring according to the present invention will provide this in a new an inventive way.

As understood from the present disclosure the LBBC is the key component in the system performing the method optimizing network traffic by barring different services based on monitored traffic load.

## Claims

1. Method for optimal utilization of the capacity of a mobile network serving mobile phones located in a selected geographical area (100), and for handling of network traffic in a period with heavy network load exerted by network traffic to or from, or both to and from said area for avoiding overloading of said mobile network, comprising the following steps:
a) establishing an overview of maximum network capacity (200) of said mobile network serving said selected geographical area as well as adjacent areas;
b) establishing an overview of the identity of mobile phones (300) located within said selected geographical area as well as in adjacent areas served by said mobile network for determining maximum traffic load that may be exerted by mobile phones (300) on the mobile network based on a scenario where each connected phone exerts maximum load on the network;
c) performing monitoring of current traffic load (400) exerted by different types of mobile services delivered via said mobile network;
d) determining type of barring (530), of one or more of said different types of mobile services to be set or removed for network traffic to or from, or both to and from, mobile phones (300) identified in step b), based on said maximum network capacity (200), said determined maximum traffic load, and said current monitored traffic load (400),
where barring is set if current monitored traffic load (400) is determined to be above the maximum network capacity (200), and where type of service to be barred is based on the service contributing the most to the traffic load, and where a set barring is removed if current monitored traffic load (400) is determined to be below the maximum capacity of the network;
e) setting type of barring (550) or removing set type of barring (540), determined in step d), of said mobile phones (300) identified in step b) and which are served by said mobile network for utilizing maximum network capacity without overloading the network during a period with heavy network load, and preferably without shutting down all network services for a particular mobile phone;
f) repeating steps b) to e).

2. Method according to claim 1, where prioritized mobile phones (300) are excluded from barring (520).

3. Method according to claim 1, where barring of the selected type of service to or from, or both to and from, mobile phones located inside said selected area is performed.

4. Method according to claim 1, where barring of the selected type of service to or from, or both to and from, mobile phones in areas adjacent to said selected area is performed.

5. Method according to claim 1, where barring of the selected type of service to or from, or both to and from, mobile phones located both inside said selected area and areas adjacent to said selected area is performed.

6. Method according to claims 3, 4 or 5, where mobile phones in the selected area are grouped in at least two groups, and where network services are barred for one group at a time set by time intervals.

7. Method according to claim 6, where barring of network services rotates between the groups set by time intervals, such that each group will have access to network services for a limited time in a period with heavy network load.

8. Method according to one of the claims 1 to 7, where type of mobile service barred is SMS, voice and/or different type of data.

9. Method according to claim 8, where the different type of data barred is low bandwidth demanding services such as browsing and/or high bandwidth demanding services such as streaming of video and voice.

10. Method according to one of the claims 1 to 9, where gradual barring of different types of mobile services for identified mobile phones is performed based on current traffic load on the mobile network.

11. Device for performing optimal utilization of the capacity of a mobile network serving mobile phones located in a selected geographical area (100), and for handling of network traffic in a period with heavy network load exerted by network traffic to or from, or both to and from said area for avoiding overloading of said mobile network, comprising:
a) input means for receiving a selected geographical area;
b) input means for receiving an overview of maximum network capacity (200) of said mobile network serving said selected geographical area as well as adjacent areas;
c) input means for receiving an overview of the identity of mobile phones (300) located within said selected geographical area as well as in adjacent areas served by said mobile network for determining maximum traffic load that may be exerted by mobile phones (300) on the mobile network;
d) input means for receiving data regarding current traffic load (400) exerted by different types of mobile services, and which are delivered via said mobile network;
e) means for determining type of barring (530) of one or more of said different types of mobile services to be set or removed for network traffic to or from, or both to and from, the identified mobile phones (300) based on said maximum network capacity (200), said determined maximum traffic load, and said current monitored traffic load (400), where barring is set if current monitored traffic load (400) is determined to be above the maximum network capacity (200), and where type of service to be barred is based on the service contributing the most to the traffic load, and
where a set barring is removed if current monitored traffic load (400) is determined to be below the maximum capacity of the network.
f) output means for outputting information of type of barring (550) to be set or removed of said identified mobile phones (300) served by said mobile network for utilizing maximum network capacity without overloading the network during a period with heavy network load, and preferably without shutting down all network services for a particular mobile phone.

12. Device according to claim 11, **characterized in** further comprising input means for receiving data regarding prioritised mobile phones (300) that are not to be barred.

13. System for performing optimal utilization of the capacity of a mobile network serving mobile phones located in a selected geographical area (100), and for handling network traffic in a period with heavy network load exerted by network traffic to or from, or both to and from said area for avoiding overloading of said mobile network, comprising:
a) means for selecting said geographical area;
b) means for establishing an overview of maximum network capacity (200) of said mobile network serving said selected geographical area as well as adjacent areas;
c) means for establishing an overview of the identity of mobile phones (300) located within said selected geographical area as well as in adjacent areas served by said mobile network for determining maximum traffic load that may be exerted by mobile phones (300) on the mobile network;
d) means for establishing an overview of the current traffic load (400) exerted by different types of mobile services delivered via said mobile network;
e) a location based barring device for determining type of barring (530) of one or more of said different types of mobile services to be set or removed for network traffic to or from, or both to and from, the identified mobile phones (300) based on said maximum network capacity (200), said determined maximum traffic load, and said current monitored traffic load (400),
where barring is set if current monitored traffic load (400) is determined to be above the maximum network capacity (200), and where type of service to be barred is based on the service contributing the most to the traffic load, and
f) a mobile switching centre performing barring (550) by enabling and disabling mobile services for said mobile phones (300), said switching centre having input means for receiving the identity of mobile phones (300) where barring (550) and type of barring is to be set or removed, determined by said location based barring device.

14. System according to claim 13, **characterized in** further comprising a priority database with the identity of prioritised mobile phones (300) that are not to be barred.

## Patentansprüche

1. Verfahren zur optimalen Ausnutzung der Kapazität eines Mobilfunknetzes, das Mobiltelefone in einem ausgewählten geografischen Gebiet (100) bedient, und zur Handhabung des Netzverkehrs in einem Zeitraum mit hoher Netzlast, die von dem Netzverkehr zu oder von oder von beiden zu oder von dem Bereich zum Vermeiden einer Überlastung des Mobilfunknetzes ausgeübt wird, umfassend folgende Schritte:
a) Erstellen eines Überblicks über die maximale Netzkapazität (200) des Mobilfunknetzes, das das ausgewählte geografische Gebiet sowie angrenzende Gebiete bedient;
b) Erstellen eines Überblicks über die Identität von Mobiltelefonen (300), die sich in dem ausgewählten geografischen Gebiet sowie in angrenzenden Gebieten befinden, die von dem Mobilfunknetz bedient werden, um die maximale Verkehrslast zu bestimmen, die von Mobiltelefonen (300) auf das Mobilfunknetz ausgeübt werden kann, basierend auf einem Szenario, in dem jedes verbundene Telefon die maximale Netzlast ausübt;
c) Ausführen einer Überwachung der aktuellen Verkehrslast (400), die von verschiedenen Arten von über das Mobilfunknetz bereitgestellten Mobilfunkdiensten ausgeübt wird;
d) Bestimmen der Art der Sperre (530) für einen oder mehrere der verschiedenen Arten von Mobilfunkdiensten, die für den in Schritt b) identifizierten Netzverkehr zu oder von oder für beide zu und von Mobiltelefonen (300) festgelegt oder entfernt werden sollen, basierend auf der maximale Netzkapazität (200), wobei die ermittelte maximale Verkehrslast und die aktuelle Verkehrslast (400) überwacht werden,
wobei die Sperre gesetzt wird, wenn bestimmt wird, dass die aktuell überwachte Verkehrslast (400) über der maximalen Netzkapazität (200) liegt, und die Art des zu sperrenden Dienstes auf dem Dienst basiert, der am meisten zu der Verkehrslast beiträgt, und ein Umfang der Sperre entfernt wird, wenn von der aktuellen überwachten Verkehrslast (400) bestimmt wird, dass sie unter der maximalen Kapazität des Netzwerks liegt;
e) Einstellen der Sperrart (550) oder Entfernen der in Schritt d) festgelegten Sperrart (540) der in Schritt b) identifizierten Mobiltelefone (300), die von dem Mobilfunknetz zur Nutzung der maximalen Netzkapazität bedient werden, ohne das Netzwerk während eines Zeitraums mit hoher Netzlast zu überlasten und vorzugsweise ohne sämtliche Netzdienste für ein bestimmtes Mobiltelefon herunterzufahren;
f) Wiederholen der Schritte b) bis e).

2. Verfahren nach Anspruch 1, bei dem priorisierte Mobiltelefone (300) von der Sperre (520) ausgeschlossen werden.

3. Verfahren nach Anspruch 1, bei dem das Sperren der ausgewählten Art des Dienstes zu oder von oder beiden zu und von Mobiltelefonen, die sich in dem ausgewählten Bereich befinden, ausgeführt wird.

4. Verfahren nach Anspruch 1, bei dem das Sperren des ausgewählten Diensttyps zu oder von oder beiden zu und von Mobiltelefonen in Gebieten, die dem ausgewählten Gebiet benachbart sind, ausgeführt wird.

5. Verfahren nach Anspruch 1, bei dem das Sperren des ausgewählten Diensttyps zu oder von oder beiden zu und von Mobiltelefonen, die sich sowohl innerhalb des ausgewählten Gebietes als auch benachbart zu dem ausgewählten Gebiet befinden, ausgeführt wird.

6. Verfahren nach den Ansprüchen 3, 4 oder 5, bei dem Mobiltelefone in dem ausgewählten Gebiet in wenigstens zwei Gruppen gruppiert werden und Netzdienste für eine Gruppe zu einem Zeitpunkt gesperrt werden, der durch Zeitintervalle festgelegt ist.

7. Verfahren nach Anspruch 6, bei dem die Sperre von Netzdiensten zwischen den Gruppen wechselt, die in Zeitintervallen festgelegt sind, so dass jede Gruppe für eine begrenzte Zeit in einem Zeitraum mit hoher Netzlast Zugriff auf Netzdienste hat.

8. Verfahren nach einem der Ansprüche 1 bis 7, bei dem die Art des gesperrten Mobilfunkdienstes SMS, Sprache und/oder eine andere Art von Daten ist.

9. Verfahren nach Anspruch 8, bei dem der unterschiedliche Typ von gesperrten Daten Dienste mit geringer Bandbreite, wie beispielsweise das Durchsuchen, und/oder Dienste mit hoher Bandbreite, wie beispielsweise das Streamen von Video und Sprache, sind.

10. Verfahren nach einem der Ansprüche 1 bis 9, bei dem das allmähliche Sperren verschiedener Arten von Mobilfunkdiensten für identifizierte Mobiltelefone auf der Grundlage der aktuellen Verkehrslast des Mobilfunknetzes ausgeführt wird.

11. Vorrichtung zur optimalen Ausnutzung der Kapazität eines Mobilfunknetzes, das Mobiltelefone in einem ausgewählten geografischen Gebiet (100) bedient, und zur Handhabung des Netzverkehrs in einem Zeitraum mit hoher Netzlast, die durch den Netzverkehr von oder zu oder zu beiden zu und von dem Gebiet zum Vermeiden einer Überlastung des Mobilfunknetzes ausgeübt wird, umfassend:
a) eine Eingabeeinrichtung zum Empfangen eines ausgewählten geografischen Gebiets;
b) eine Eingabeeinrichtung zum Empfangen eines Überblicks über die maximale Netzkapazität (200) des Mobilfunknetzes, das das ausgewählte geografische Gebiet sowie angrenzende Gebiete bedient;
c) eine Eingabeeinrichtung zum Empfangen eines Überblicks über die Identität von Mobiltelefonen (300), die sich innerhalb des ausgewählten geografischen Gebiets sowie in angrenzenden Gebieten befinden, die von dem Mobilfunknetz bedient werden, um die maximale Verkehrslast zu bestimmen, die von Mobiltelefonen (300) auf das Mobilfunknetz ausgeübt werden kann;
d) eine Eingabeeinrichtung zum Empfangen von Daten bezüglich der aktuellen Verkehrslast (400), die von verschiedenen Arten von Mobilfunkdiensten ausgeübt werden und die über das Mobilfunknetz geliefert werden;
e) eine Einrichtung zum Bestimmen der Art der Sperre (530) eines oder mehrerer der verschiedenen Arten von Mobilfunkdiensten, die für den Netzverkehr zu oder von oder beiden zu und von den identifizierten Mobiltelefonen (300) basierend auf der maximalen Netzkapazität (200), der ermittelten maximalen Verkehrslast und der aktuellen überwachten Verkehrslast (400) eingestellt oder entfernt werden sollen, wobei die Sperre festgelegt wird, wenn festgestellt wird, dass die aktuelle überwachte Verkehrslast (400) über der maximalen Netzkapazität (200) liegt, und der Typ des zu sperrenden Dienstes auf dem Dienst basiert, der am meisten zur Verkehrslast beiträgt und bei dem eine festgelegte Sperre aufgehoben wird, wenn festgestellt wird, dass die derzeit überwachte Verkehrslast (400) unter der maximalen Kapazität des Netzes liegt,
f) eine Ausgabeeinrichtung zum Ausgeben von Informationen über die Art der Sperre (550), die von den identifizierten Mobiltelefonen (300), die von dem Mobilfunknetz bedient werden, gesetzt oder entfernt werden sollen, um die maximale Netzkapazität zu nutzen, ohne das Netz während eines Zeitraums mit hoher Netzlast zu überlasten, und vorzugsweise, ohne alle Netzdienste für ein bestimmtes Mobiltelefon herunterzufahren.

12. Vorrichtung nach Anspruch 11, **dadurch gekennzeichnet, dass** sie weiterhin eine Eingabeeinrichtung zum Empfangen von Daten bezüglich priorisierter Mobiltelefone (300) umfasst, die nicht gesperrt werden sollen.

13. System zur optimalen Ausnutzung der Kapazität eines Mobilfunknetzes, das Mobiltelefone in einem ausgewählten geografischen Gebiet (100) bedient, und zum Handhaben des Netzverkehrs in einem Zeitraum mit hoher Netzlast, die durch den Netzverkehr zu oder von oder von oder beiden zu und von dem Bereich ausgeübt wird, um eine Überlastung des Mobilnetzwerks zu vermeiden, umfassend:
a) eine Einrichtung zum Auswählen des geografischen Gebiets;
b) eine Einrichtung zum Erstellen eines Überblicks über die maximale Netzkapazität (200) des Mobilfunknetzes, das das ausgewählte geografische Gebiet sowie angrenzende Gebiete bedient;
c) eine Einrichtung zum Erstellen eines Überblicks über die Identität von Mobiltelefonen (300), die sich in dem ausgewählten geografischen Gebiet sowie in angrenzenden Gebieten befinden, die von dem Mobilfunknetz bedient werden, um die maximale Verkehrslast zu bestimmen, die von Mobiltelefonen (300) auf das Mobilfunknetz ausgeübt werden kann;
d) eine Einrichtung zum Erstellen eines Überblicks über die aktuelle Verkehrslast (400), die von verschiedenen Arten von Mobilfunkdiensten ausgeübt wird, die über das Mobilfunknetz geliefert werden;
e) eine ortsbasierte Sperrvorrichtung zum Bestimmen der Art der Sperre (530) eines oder mehrerer der verschiedenen Arten von Mobilfunkdiensten, die für den Netzverkehr zu oder von oder von beiden zu und von den identifizierten Mobiltelefonen (300) eingestellt oder entfernt werden sollen, basierend auf der maximalen Netzkapazität (200), der bestimmten maximalen Verkehrslast und der aktuell überwachten Verkehrslast (400),
wobei eine Sperre festgelegt wird, wenn festgestellt wird, dass die aktuell überwachte Verkehrslast (400) über der maximalen Netzkapazität (200) liegt, und die Art des zu sperrenden Dienstes auf dem Dienst basiert, der am meisten zur Verkehrslast beiträgt, und
f) eine Mobilvermittlungsstelle, die eine Sperre (550) durch Aktivieren und Deaktivieren von Mobilfunkdiensten für die Mobiltelefone (300) ausführt, wobei die Vermittlungsstelle eine Eingabeeinrichtung zum Empfangen der Identität von Mobiltelefonen (300) aufweist, bei denen die Sperre (550) und die Art der Sperre gesetzt oder entfernt werden soll, die von der ortsbezogenen Sperrvorrichtung eingestellt oder entfernt wird.

14. System nach Anspruch 13, **dadurch gekennzeichnet, dass** es weiterhin eine Prioritätsdatenbank mit der Identität priorisierter Mobiltelefone (300) umfasst, die nicht gesperrt werden sollen.

## Revendications

1. Procédé d'utilisation optimale de la capacité d'un réseau mobile desservant des téléphones mobiles situés dans une zone géographique sélectionnée (100), et de traitement de trafic de réseau au cours d'une période de forte charge de réseau exercée par le trafic de réseau à destination ou en provenance, ou à la fois à destination et en provenance de ladite zone, en vue d'éviter une surcharge dudit réseau mobile, comprenant les étapes ci-dessous consistant à :
a) établir une vue d'ensemble de la capacité de réseau maximale (200) dudit réseau mobile desservant ladite zone géographique sélectionnée ainsi que des zones adjacentes;
b) établir une vue d'ensemble de l'identité de téléphones mobiles (300) situés dans ladite zone géographique sélectionnée ainsi que dans des zones adjacentes desservies par ledit réseau mobile, en vue de déterminer une charge de trafic maximale qui peut être exercée par des téléphones mobiles (300) sur le réseau mobile, sur la base d'un scénario dans lequel chaque téléphone connecté exerce une charge maximale sur le réseau ;
c) mettre en oeuvre une surveillance de la charge de trafic en cours (400) exercée par différents types de services mobiles délivrés par l'intermédiaire dudit réseau mobile ;
d) déterminer un type d'interdiction (530), d'un ou plusieurs desdits différents types de services mobiles, à définir ou à supprimer pour le trafic de réseau, à destination ou en provenance, ou à la fois à destination et en provenance, des téléphones mobiles (300) identifiés à l'étape b), sur la base de ladite capacité de réseau maximale (200), de ladite charge de trafic maximale déterminée, et de ladite charge de trafic surveillée en cours (400) ;
dans lequel une interdiction est définie si la charge de trafic surveillée en cours (400) est déterminée comme étant supérieure à la capacité de réseau maximale (200), et dans lequel le type de service à interdire est basé sur le service contribuant le plus à la charge de trafic ; et
dans lequel une interdiction définie est supprimée si la charge de trafic surveillée en cours (400) est déterminée comme étant inférieure à la capacité de réseau maximale ;
e) définir le type d'interdiction (550) ou supprimer le type d'interdiction défini (540), déterminé à l'étape d), desdits téléphones mobiles (300) identifiés à l'étape b) et qui sont desservis par ledit réseau mobile pour utiliser la capacité de réseau maximale sans surcharger le réseau au cours d'une période de forte charge de réseau, et de préférence sans mettre fin à tous les services de réseau pour un téléphone mobile particulier ;
f) répéter les étapes b) à e).

2. Procédé selon la revendication 1, dans lequel les téléphones mobiles priorisés (300) sont exclus de toute interdiction (520).

3. Procédé selon la revendication 1, dans lequel l'étape d'interdiction du type de service sélectionné à destination ou en provenance, ou à la fois à destination et en provenance, de téléphones mobiles situés à l'intérieur de ladite zone sélectionnée, est mise en oeuvre.

4. Procédé selon la revendication 1, dans lequel l'étape d'interdiction du type de service sélectionné à destination ou en provenance, ou à la fois à destination et en provenance, de téléphones mobiles situés dans des zones adjacentes à ladite zone sélectionnée est mise en oeuvre.

5. Procédé selon la revendication 1, dans lequel l'étape d'interdiction du type de service sélectionné à destination ou en provenance, ou à la fois à destination et en provenance, de téléphones mobiles situés à la fois à l'intérieur de ladite zone sélectionnée et dans des zones adjacentes à ladite zone sélectionnée, est mise en oeuvre.

6. Procédé selon la revendication 3, 4 ou 5, dans lequel des téléphones mobiles dans la zone sélectionnée sont regroupés en au moins deux groupes, et dans lequel des services de réseau sont interdits pour un groupe à un instant défini par des intervalles de temps.

7. Procédé selon la revendication 6, dans lequel l'interdiction de services de réseau effectue une rotation entre les groupes définis par des intervalles de temps, de sorte que chaque groupe aura accès à des services de réseau pour un temps limité au cours d'une période de forte charge de réseau.

8. Procédé selon l'une quelconque des revendications 1 à 7, dans lequel le type de service mobile interdit correspond aux services SMS, voix et/ou à différents types de données.

9. Procédé selon la revendication 8, dans lequel les différents types de données interdits concernent des services à faible demande de bande passante, tels que la navigation, et/ou des services à forte demande de bande passante, tels que la diffusion en continu de contenu vidéo et de contenu vocal.

10. Procédé selon l'une quelconque des revendications 1 à 9, dans lequel une interdiction progressive de différents types de services mobiles pour des téléphones mobiles identifiés est mise en oeuvre sur la base de la charge de trafic en cours sur le réseau mobile.

11. Dispositif destiné à mettre en oeuvre une utilisation optimale de la capacité d'un réseau mobile desservant des téléphones mobiles situés dans une zone géographique sélectionnée (100), et un traitement de trafic de réseau au cours d'une période de forte charge de réseau exercée par le trafic de réseau à destination ou en provenance, ou à la fois à destination et en provenance de ladite zone, en vue d'éviter une surcharge dudit réseau mobile, comprenant :
a) un moyen d'entrée pour recevoir une zone géographique sélectionnée ;
b) un moyen d'entrée pour recevoir une vue d'ensemble de la capacité de réseau maximale (200) dudit réseau mobile desservant ladite zone géographique sélectionnée ainsi que des zones adjacentes ;
c) un moyen d'entrée pour recevoir une vue d'ensemble de l'identité de téléphones mobiles (300) situés dans ladite zone géographique sélectionnée ainsi que dans des zones adjacentes desservies par ledit réseau mobile, en vue de déterminer une charge de trafic maximale qui peut être exercée par des téléphones mobiles (300) sur le réseau mobile ;
d) un moyen d'entrée pour recevoir des données concernant la charge de trafic en cours (400) exercée par différents types de services mobiles délivrés par l'intermédiaire dudit réseau mobile ;
e) un moyen pour déterminer un type d'interdiction (530), d'un ou plusieurs desdits différents types de services mobiles, à définir ou à supprimer pour le trafic de réseau, à destination ou en provenance, ou à la fois à destination et en provenance, des téléphones mobiles (300) identifiés, sur la base de ladite capacité de réseau maximale (200), de ladite charge de trafic maximale déterminée, et de ladite charge de trafic surveillée en cours (400) ;
dans lequel une interdiction est définie si la charge de trafic surveillée en cours (400) est déterminée comme étant supérieure à la capacité de réseau maximale (200), et dans lequel le type de service à interdire est basé sur le service contribuant le plus à la charge de trafic ; et
dans lequel une interdiction définie est supprimée si la charge de trafic surveillée en cours (400) est déterminée comme étant inférieure à la capacité de réseau maximale ;
f) un moyen de sortie pour fournir en sortie des informations de type d'interdiction (550) à définir ou à supprimer desdits téléphones mobiles (300) desservis par ledit réseau mobile pour utiliser la capacité de réseau maximale sans surcharger le réseau au cours d'une période de forte charge de réseau, et de préférence sans mettre fin à tous les services de réseau pour un téléphone mobile particulier.

12. Dispositif selon la revendication 11, **caractérisé en ce qu'**il comprend en outre un moyen d'entrée pour recevoir des données concernant des téléphones mobiles priorisés (300) qui ne doivent pas être interdits.

13. Système destiné à mettre en oeuvre une utilisation optimale de la capacité d'un réseau mobile desservant des téléphones mobiles situés dans une zone géographique sélectionnée (100), et un traitement de trafic de réseau au cours d'une période de forte charge de réseau exercée par le trafic de réseau à destination ou en provenance, ou à la fois à destination et en provenance de ladite zone, en vue d'éviter une surcharge dudit réseau mobile, comprenant :
a) un moyen pour sélectionner ladite zone géographique ;
b) un moyen pour établir une vue d'ensemble de la capacité de réseau maximale (200) dudit réseau mobile desservant ladite zone géographique sélectionnée ainsi que des zones adjacentes ;
c) un moyen pour établir une vue d'ensemble de l'identité de téléphones mobiles (300) situés dans ladite zone géographique sélectionnée, ainsi que dans des zones adjacentes desservies par ledit réseau mobile, en vue de déterminer la charge de trafic maximale qui peut être exercée par les téléphones mobiles (300) sur le réseau mobile ;
d) un moyen pour établir une vue d'ensemble de la charge de trafic en cours (400) exercée par différents types de services mobiles délivrés par l'intermédiaire dudit réseau mobile ;
e) un dispositif d'interdiction sur la base de l'emplacement, destiné à déterminer le type d'interdiction (530) d'un ou de plusieurs desdits différents types de services mobiles à définir ou à supprimer pour le trafic de réseau à destination ou en provenance, ou à la fois à destination et en provenance, des téléphones mobiles identifiés (300), sur la base de ladite capacité de réseau maximale (200), de ladite charge de trafic maximale déterminée, et de ladite charge de trafic surveillée en cours (400) ;
dans lequel une interdiction est définie si la charge de trafic surveillée en cours (400) est déterminée comme étant supérieure à la capacité de réseau maximale (200), et dans lequel le type de service à interdire est basé sur le service contribuant le plus à la charge de trafic ; et
f) un centre de commutation des services mobiles mettant en oeuvre une interdiction (550) en activant et en désactivant des services mobiles pour lesdits téléphones mobiles (300), ledit centre de commutation présentant un moyen d'entrée pour recevoir l'identité des téléphones mobiles (300) dans lequel l'interdiction (550) et le type d'interdiction doivent être définis ou supprimés, ce qui est déterminé par ledit dispositif d'interdiction sur la base de l'emplacement.

14. Système selon la revendication 13, **caractérisé en ce qu'**il comprend en outre une base de données de priorités contenant l'identité des téléphones mobiles priorisés (300) qui ne doivent pas être interdits.
